# EUROPEAN PATENT SPECIFICATION

(11) **EP 2 950 089 B1**
(45) Date of publication and mention of the grant of the patent: **29.04.2020**
(21) Application number: 15168660.7
(22) Date of filing: 21.05.2015
(51) Int. Cl.: G01N 27/30, G01N 27/404

(54) **GALVANIC CELL TYPE OXYGEN SENSOR WITH A PB-SB ALLOY NEGATIVE ELECTRODE**
GALVANISCHER SAUERSTOFFSENSOR MIT EINER NEGATIVEN ELEKTRODE AUS EINER PB-SB-LEGIERUNG
CAPTEUR D'OXYGÈNE DE TYPE DE CELLULES GALVANIQUE AVEC UNE ÉLECTRODE NÉGATIVE EN ALLIAGE PB-SB

(30) Priority: 26.05.2014 JP 2014107934; 12.05.2015 JP 2015097767
(43) Date of publication of application: 02.12.2015
(73) Proprietor: Maxell, Ltd., Kyoto 618-8525 (JP)
(72) Inventor: Kitazawa, Naohisa, Kyoto, 601-8520 (JP)
(74) Representative: Isarpatent

(56) References cited:
- EP-A1- 2 219 024
- CA-A1- 2 059 735
- DE-A1- 2 328 921
- JP-A- 2002 350 384
- JP-A- 2004 311 131
- US-A- 3 674 656
- US-A- 4 529 486
- F. ARIFUKU ET AL: "Distribution profiles of antimony as a function of depth in corrosion films on a Pb-Sb alloy", JOURNAL OF APPLIED ELECTROCHEMISTRY, vol. 9, no. 5, 1 September 1979 (1979-09-01), pages 629-634, XP055201095, ISSN: 0021-891X, DOI: 10.1007/BF00610951
- GUO Y ET AL: "The kinetics of the reduction processes of PbO film in H2SO4-VI. Effects of Pb@?Sb alloy electrodes", ELECTROCHIMICA ACTA, ELSEVIER SCIENCE PUBLISHERS, BARKING, GB, vol. 38, no. 8, 1 June 1993 (1993-06-01), pages 1131-1138, XP026506434, ISSN: 0013-4686, DOI: 10.1016/0013-4686(93)80223-M [retrieved on 1993-06-01]
- Fawad Tariq ET AL: "Failure Analysis of Cast Lead-Antimony Battery Grids", Journal of Failure Analysis and Prevention, vol. 10, no. 2, 9 February 2010 (2010-02-09), pages 152-160, XP055583290, Boston ISSN: 1547-7029, DOI: 10.1007/s11668-010-9331-1

## Description

### FIELD

The present invention relates to a sensor that includes Pb (lead) in an electrode and measures the concentration of a gas or a liquid through the electrochemical reaction of the electrode.

### BACKGROUND

In recent years, potentiometric type sensors and electrochemical type sensors, which include electrodes (a positive electrode and a negative electrode) and an electrolyte solution, are widely known. In particular, among electrochemical type sensors, galvanic cell type oxygen sensors using Pb for negative electrode are small in size and light in weight, operate at normal temperature, and are also inexpensive. Therefore, they have been used in a wide range of fields such as for checking the degree of oxygen deficiency in ship's hold and in manholes, or for detecting oxygen concentrations in medical devices such as anesthesia machines and ventilators.

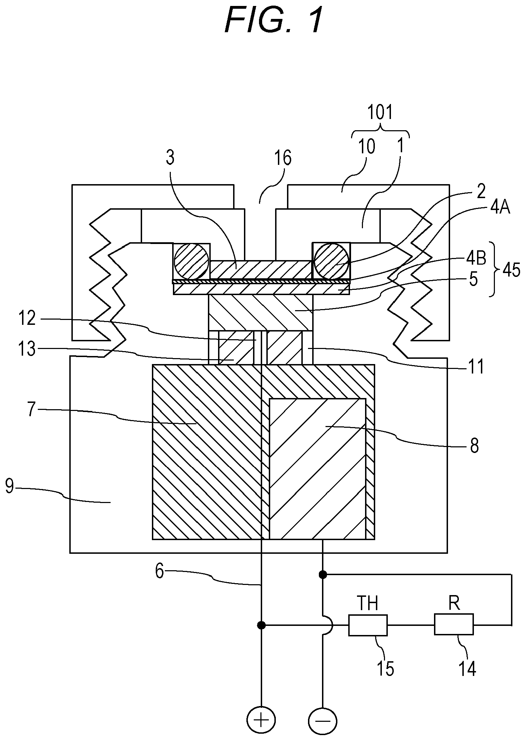

The operation principle of a galvanic cell type oxygen sensor is as follows. Oxygen that has passed through an oxygen permeable membrane (corresponding to 4A in Fig. 1), which selectively permeates oxygen and controls the permeation amount of oxygen so as to match the cell reaction, is reduced by a catalyst electrode (corresponding to 4B in Fig. 1), which is capable of electrochemically reducing oxygen. Through an electrolyte solution (corresponding to 7 in Fig. 1), the reduced oxygen causes the following electrochemical reaction with an electrode (corresponding to a negative electrode 8 in Fig. 1).

When the electrolyte solution is acidic:
Positive electrode reaction: O₂ + 4H⁺ + 4e⁻ → 2H₂O
Negative electrode reaction: 2Pb + 2H₂O → 2PbO + 4H⁺ + 4e⁻
Overall reaction: 2Pb + O₂ → 2PbO

When the electrolyte solution is alkaline:
Positive electrode reaction: O₂ + 2H₂O + 4e⁻ → 4OH⁻
Negative electrode reaction: 2Pb + 4OH⁻ → 2PbO + 2H₂O + 4e⁻
Overall reaction: 2Pb + O₂ → 2PbO

The charge carriers are different between the case where the electrolyte solution (7) is acidic and the case where it is alkaline. However, in either case, a current corresponding to the oxygen concentration is generated between the catalyst electrode (4B) and the electrode (8). The current generated as a result of the positive electrode reaction in the catalyst electrode (4B) is collected by a positive current collector (corresponding to 5 in Fig. 1) that is in pressure contact with the catalyst electrode (4B), and led outside by a positive electrode leading wire (corresponding to 6 in Fig. 1). The current then flows into the electrode (8) through a correction resistance (corresponding to 14 in Fig. 1) and a thermistor for temperature compensation (corresponding to 15 in Fig. 1) and is thereby converted into a voltage signal, whereby a voltage is obtained as an oxygen sensor output. Subsequently, the obtained output voltage is converted into an oxygen concentration by a known method and detected as an oxygen concentration. PbO generated on the negative electrode surface dissolves into the electrolyte solution, whereby Pb is newly exposed to the surface, which is then further oxidized; the electrochemical reaction is continued based on this mechanism.

Such an oxygen sensor is required to have reduced output fluctuations and output abnormalities. Techniques for solving these problems even upon application of heat, shock, etc., have been disclosed.

For example, JP-A-2002-350384 describes an aspect in which, in order to prevent the formation of an air layer between a positive electrode and a negative electrode upon application of vibration, shock, heat, etc., an electrolyte solution holding member is provided to a positive current collector and an opening of a negative electrode chamber. JP-A-2001-296268 describes an aspect in which, in order to suppress changes in the contact state between a positive current collector and a positive electrode leading wire upon application of vibration or shock, the positive current collector and the positive electrode leading wire are made of metal and integrated by welding, and further an electrolyte solution holding material is provided in contact with the positive current collector. JP-A-H6-88268 describes an aspect in which, in order to prolong the life and prevent the formation of an oxygen reduction blocking layer on the anode surface, the anode surface has a thin layer containing a composite component of at least one metal selected from copper, lead, antimony, and germanium. DE 23 28 921 A1 describes a device for electrochemically determining the oxygen content of a liquid with a rotating grinding device for cleaning the electrode surface, wherein the anode is made of Pb with about 30-40 vol % Sb.

### SUMMARY

The techniques described in JP-A-2002-350384, JP-A-2001-296268, and JP-A-H6-88268 do not suppress the occurrence of output fluctuations and output abnormalities resulting from the above electrochemical reaction itself, which is susceptible to the influence of the measured value of the oxygen concentration to be detected.

An object of the present invention is to provide a sensor capable of suppressing the occurrence of output fluctuations and output abnormalities resulting from an electrochemical reaction itself, which is susceptible to the influence of the measured value of the oxygen concentration to be detected.

A sensor according to an aspect of the present invention includes a holder; and an electrode and an electrolyte solution that are placed in the holder, wherein the electrode contains a Pb-Sb alloy.

### BRIEF DESCRIPTION OF DRAWINGS

FIG. 1 is a conceptual diagram showing a cross-sectional structure of a galvanic cell type oxygen sensor according to an embodiment.
FIG. 2 is a conceptual diagram showing a metal structure on an arbitrary surface of an electrode used for the galvanic cell type oxygen sensor according to the embodiment.
FIG. 3 is a conceptual diagram showing another metal structure on an arbitrary surface of an electrode used for the galvanic cell type oxygen sensor according to the embodiment.
FIG. 4 is a conceptual diagram showing still another metal structure on an arbitrary surface of an electrode used for the galvanic cell type oxygen sensor according to the embodiment.
FIG. 5 is a conceptual diagram showing yet still another metal structure on an arbitrary surface of an electrode used for the galvanic cell type oxygen sensor not according to the present invention.
FIG. 6 is an equilibrium diagram of an ordinary Pb-Sb binary alloy.
FIG. 7 is a conceptual diagram describing the stabilization of output voltage.
FIG. 8 is a conceptual diagram showing a metal structure on an arbitrary surface of a conventional electrode.

### DESCRIPTION OF EMBODIMENTS

A sensor according to an aspect of the present invention includes a holder; and a positive electrode, a negative electrode and an electrolyte solution that are placed in the holder, a correction resistance and a thermistor for temperature compensation that are connected in series to the positive electrode and the negative electrode, characterized in that the negative electrode contains a Pb-Sb alloy, and the Sb content in the Pb-Sb alloy is 0.5 wt % or more and 11.1 wt % or less.

It is preferable that the Pb-Sb alloy has a metal structure including Pb-based crystal grains containing Sb.

It is preferable that the Pb-Sb alloy has an Sb content of 0.5 wt% or more and less than 3.5 wt%.

It is preferable that the Pb-Sb alloy has an Sb content of 0.5 wt% or more and 3.0 wt% or less.

It is preferable that the Pb-Sb alloy has a metal structure including a mixture of Pb-based crystal grains containing Sb and a Pb-Sb-based eutectic structure.

It is preferable that the Pb-Sb alloy has an Sb content of 3.5 wt% or more and less than 11.1 wt%.

It is preferable that the Pb-Sb alloy has an Sb content of 4.0 wt% or more and 10.0 wt% or less.

It is preferable that the Pb-Sb alloy has a metal structure including only a Pb-Sb-based eutectic structure.

It is preferable that the Pb-Sb alloy has an Sb content of 11.1 wt%.

It is preferable that the electrolyte solution is acidic.

It is preferable that the electrolyte solution is alkaline.

It is preferable that the electrolyte solution is a mixed aqueous solution of acetic acid and potassium acetate.

It is preferable that the electrolyte solution is an aqueous potassium hydroxide solution.

It is preferable that the Pb-Sb alloy contains at least one element selected from the group consisting of Al, Ag, As, Bi, Cd, Cu, Fe, Mg, Na, Hg, Sn, Zn, S, Se, and Ca.

With such a configuration, a sensor capable of suppressing the occurrence of output fluctuations and output abnormalities resulting from an electrochemical reaction itself, which is susceptible to the influence of the measured value of the oxygen concentration to be detected, can be provided.

The present inventor has found a problem of occurring output fluctuations and output abnormalities which result from the above-mentioned electrochemical reaction itself, and further found means capable of solving the problem.

Such a sensor performs measurement through the electrochemical reaction as mentioned above, that is, a mechanism that consumes the electrode (Pb). The consumption usually takes place on the surface of the electrode (Pb). However, it has been found that, depending on the degree of consumption, it also takes place inside the electrode (Pb). In such a case, inside the electrode, the mechanical strength of the part that has been consumed is reduced, resulting in electrode chipping at the part. Further, the chipped fragments pass from the electrolyte solution (7) through a bore for supplying an electrolyte solution (11) or a bore for a leading wire (12) and come into contact with the positive current collector (5) and the catalyst electrode (4B). It has been found that this causes output fluctuations and output abnormalities.

Accordingly, the present inventor has considered to increase the hardness of the electrode (Pb). However, when the hardness is simply increased and this rather results in the inhibition of the electrochemical reaction, the electrode in such a state has decreased electrode activity. As a result, it becomes difficult to accurately detect the oxygen concentration, and functioning as a sensor may be inhibited. Thus, it has been demanded to achieve the suppression of the inhibition of the reaction and also the suppression of the electrode chipping, which are conflicting with each other.

Then, as a result of intensive researches, the present inventor has found that when the electrode (Pb) contains a Pb-Sb alloy, functioning as a sensor is possible, and the electrode chipping can also be suppressed, and also found that as a result, the occurrence of output fluctuations and output abnormalities resulting from the electrochemical reaction itself can be suppressed, and further the extension of sensor life can also be achieved. These findings have led to the completion of the present invention.

Hereinafter, an embodiment of the present invention will be described.

In the present embodiment, as a preferred example of sensors according to the present invention, a galvanic cell type oxygen sensor will be described.

FIG. 1 is a conceptual diagram showing a cross-sectional structure of a galvanic cell type oxygen sensor according to the present embodiment.

In FIG. 1, 1 denotes a first holder cover (inner cover), 2 denotes an O-ring, 3 denotes a protective membrane for preventing adhesion of trash, dust, or a water film to an oxygen permeable membrane , 4A denotes an oxygen permeable membrane , 4B denotes a catalyst electrode, 5 denotes a positive current collector, 6 denotes a positive electrode leading wire, 7 denotes an electrolyte solution, 8 denotes a negative electrode, 9 denotes a holder, 10 denotes a second holder cover (outer cover), 11 denotes a bore for supplying an electrolyte solution, 12 denotes a bore for a leading wire, 13 denotes a positive current collector holding part, 14 denotes a correction resistance, and 15 denotes a thermistor for temperature compensation. The catalyst electrode 4B and the positive current collector 5 form a positive electrode 45. The first holder cover 1 and the second holder cover 10 form a holder cover 101.

The galvanic cell type oxygen sensor according to the present embodiment includes, as shown in FIG. 1, a holder 9; a positive electrode 45, a negative electrode 8, and an electrolyte solution 7 placed in the holder 9; an oxygen permeable membrane 4A provided on the positive electrode 45; a protective membrane 3 provided on the oxygen permeable membrane 4A; a holder cover 101 fixed or removably attached onto the protective membrane 3 of the holder 9 and having formed therein a through hole 16 to serve as an oxygen supply path (space) to the oxygen permeable membrane 4A; and a correction resistance 14 and a thermistor for temperature compensation 15 connected in series to the positive electrode 45 and the negative electrode 8.

It should be noted that the sensor includes the holder 9; and an electrode (the negative electrode 8 in FIG. 1) and the electrolyte solution 7 that are placed in the holder 9, wherein the electrode contains a Pb-Sb alloy (in this embodiment, the electrode is made of a Pb-Sb alloy).

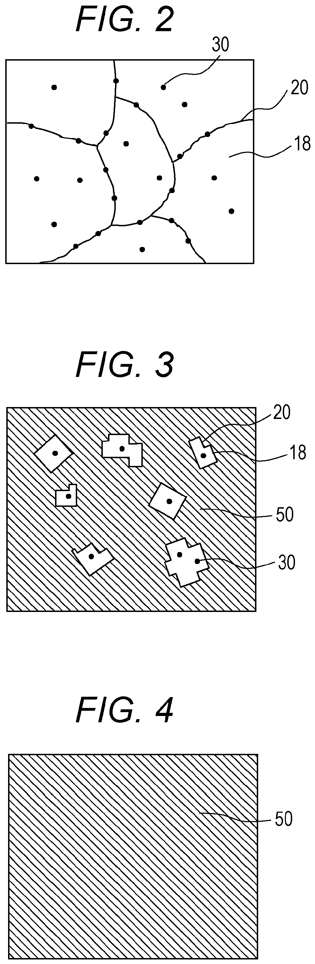

The term "Pb-Sb alloy" referred to herein is an alloy made mainly of Pb and Sb. However, without deviating from the gist of the present invention (to have a metal structures shown in FIG. 2 to FIG. 5 mentioned below), metals other than Pb and Sb and further impurities may also be contained. Examples of the metals other than Pb and Sb and further impurities include Al, Ag, As, Bi, Cd, Cu, Fe, Mg, Na, Hg, Sn, Zn, S, Se, and Ca.

As described above, the sensor includes an electrode (the negative electrode 8 in FIG. 1) that contains a Pb-Sb alloy. Therefore, functioning as a sensor is possible, and the electrode chipping can also be suppressed. This is believed to be as follows: even when a Pb-Sb alloy is used, Pb is present in the alloy so that the electrochemical reaction of Pb occurs on the electrode surface, while Sb is present inside the electrode so that the reaction inside the electrode is inhibited. Since the surface area that contributes to the reaction inside the electrode is smaller as compared with the reaction on the electrode surface, it is believed that the reaction inside the electrode is smaller in terms of reaction scale.

Accordingly, when a Pb-Sb alloy is used as an electrode (the negative electrode 8 in FIG. 1), the inhibition of the electrochemical reaction can be suppressed, that is, functioning as a sensor is possible, and the electrode chipping can also be suppressed. As a result, the occurrence of output fluctuations and output abnormalities can be suppressed, and further the extension of sensor life can also be achieved.

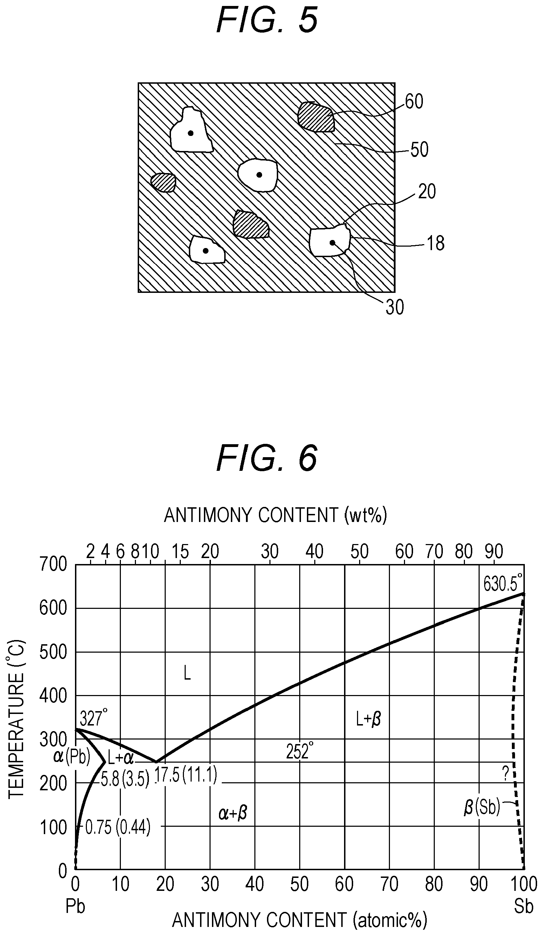

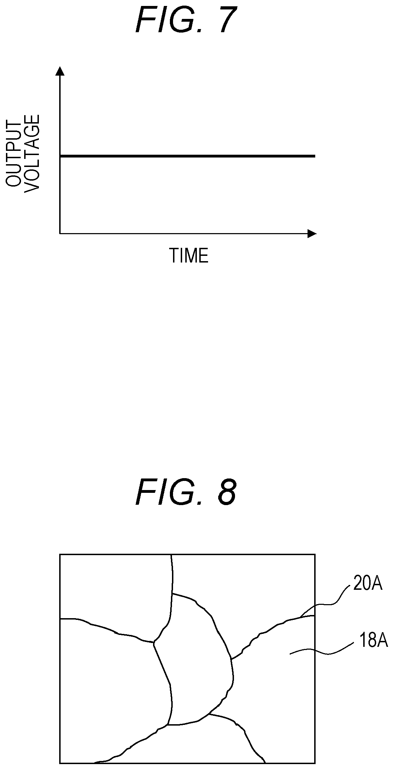

FIG. 2 is a conceptual diagram showing a metal structure on an arbitrary surface of an electrode used for the galvanic cell type oxygen sensor according to the present embodiment, FIG. 6 is an equilibrium diagram of an ordinary Pb-Sb binary alloy, and FIG. 8 is a conceptual diagram showing a metal structure on an arbitrary surface of a conventional electrode.

It is preferable that the Pb-Sb alloy has a metal structure including Pb-based crystal grains 18 containing Sb 30 inside (α-phase in FIG. 6, the same shall apply hereinafter) as shown in FIG. 2. The metal structure has a crystal grain boundary 20 between the Pb crystal grains 18.

The metal structure of FIG. 2 is given when the Sb content in the Pb-Sb alloy is 0.5 wt% or more and less than 3.5 wt% (more preferably 0.5 wt% or more and 3.0 wt% or less).

The Sb content in the Pb-Sb alloy herein is calculated as mass% of Sb based on the entire metal elements (Pb + Sb + "metals other than Pb and Sb and further impurities"= 100%) measured by the EDX analysis of an arbitrary part of the alloy (beam diameter: 1 mm) to be measured.

The negative electrode 8 of a conventional galvanic cell type oxygen sensor is Pb. Therefore, the metal structure thereof includes, as shown in FIG. 8, Pb crystal grains 18A containing no Sb 30 inside and a crystal grain boundary 20A between the Pb crystal grains 18A.

In contrast, in the present invention, the negative electrode 8 has a metal structure as shown in FIG. 2. As a result, functioning as a sensor is possible, and the electrode (negative electrode 8) chipping can be also suppressed. This is believed to be because the electrochemical reaction of Pb occurs on the surface of the Pb-based crystal grains 18 while Sb is present inside the electrode, the metallic mechanical bonding of the crystal grain boundary 20 between the Pb-based crystal grains 18 is strengthened, resulting in the inhibition of the reaction inside the electrode (particularly at the crystal grain boundary 20).

As mentioned above, it is believed that the reaction inside the electrode is smaller in scale. Accordingly, when the negative electrode 8 has a metal structure as shown in FIG. 2, the inhibition of the electrochemical reaction can be suppressed, that is, functioning as a sensor is possible, and the electrode chipping can also be suppressed. As a result, the occurrence of output fluctuations and output abnormalities can be suppressed, and further the extension of sensor life can also be achieved.

FIG. 3 is a conceptual diagram showing another metal structure on an arbitrary surface of an electrode used for the galvanic cell type oxygen sensor according to the present embodiment.

It is preferable that the Pb-Sb alloy has a metal structure including a mixture of Pb-based crystal grains 18 containing Sb 30 inside and a Pb-Sb-based eutectic structure 50 as shown in FIG. 3.

The metal structure of FIG. 3 is given when the Sb content in the Pb-Sb alloy is 3.5 wt% or more and less than 11.1 wt% (more preferably 4.0 wt% or more and 10.0 wt% or less).

As described above, when the Pb-Sb alloy has a metal structure as shown in FIG. 3, functioning as a sensor is possible, and the electrode (negative electrode 8) chipping can be also suppressed.

This is believed to be because the electrochemical reaction of Pb occurs on the surface of the Pb-based crystal grains 18 while Sb is present inside the electrode, the metallic mechanical bonding of the crystal grain boundary 20 is strengthened, resulting in the inhibition of the reaction inside the electrode (particularly at the crystal grain boundary 20). In the Pb-Sb-based eutectic structure 50, the crystal width thereof is finer as compared with the Pb-based crystal grains 18, and thus the grain boundary area that contacts the electrolyte solution is increased. Therefore, it is believed that the dissolution of the Pb-Sb-based eutectic structure 50 into the inside of the electrode is reduced.

Accordingly, when the negative electrode 8 has a metal structure as shown in FIG. 3, the inhibition of the electrochemical reaction can be suppressed, that is, functioning as a sensor is possible, and the electrode chipping can also be suppressed. As a result, the occurrence of output fluctuations and output abnormalities can be suppressed, and further the extension of sensor life can also be achieved.

FIG. 4 is a conceptual diagram showing still another metal structure on an arbitrary surface of an electrode used for the galvanic cell type oxygen sensor according to the present embodiment.

It is preferable that the Pb-Sb alloy has a metal structure including only a Pb-Sb-based eutectic structure as shown in FIG. 4.

The metal structure in FIG. 4 is given when the Sb content in the Pb-Sb alloy is 11.1 wt%.

As described above, when the Pb-Sb alloy has a metal structure as shown in FIG. 4, functioning as a sensor is possible, and the electrode (negative electrode 8) chipping can be also suppressed.

This is considered to be as follows: the reaction inside the electrode is inhibited because of the fine Pb-Sb-based eutectic structure 50; however on the surface, the grain boundary area that contacts the electrolyte solution is increased, but the electrochemical reaction of Pb is the same as in the case of a conventional Pb negative electrode.

Accordingly, when the negative electrode 8 has a metal structure as shown in FIG. 4, the inhibition of the electrochemical reaction can be suppressed, that is, functioning as a sensor is possible, and the electrode chipping can also be suppressed. As a result, the occurrence of output fluctuations and output abnormalities can be suppressed, and further the extension of sensor life can also be achieved.

FIG. 5 is a conceptual diagram showing yet still another metal structure on an arbitrary surface of an electrode used for the galvanic cell type oxygen sensor not according to the present embodiment.

The Pb-Sb alloy has a metal structure including a mixture of Pb-based crystal grains containing Sb 30 inside, a Pb-Sb-based eutectic structure 50, and a solid solution of Sb 60 (β-phase in FIG. 6, the same shall apply hereinafter) as shown in FIG. 5.

The metal structure in FIG. 5 is given when the Sb content in the Pb-Sb alloy is more than 11.1 wt%.

As described above, when the Pb-Sb alloy has a metal structure as shown in FIG. 5, functioning as a sensor is possible, and the electrode (negative electrode 8) chipping can be also suppressed.

This is considered to be because the electrochemical reaction of Pb occurs on the surface of the Pb-based crystal grains 18 while Sb is present inside the electrode, the metallic mechanical bonding of the crystal grain boundary 20 is strengthened, resulting in the inhibition of the reaction inside the electrode (particularly at the crystal grain boundary 20), and further, although the reaction does not occur on the surface of the solid solution of Sb 60, the reaction proceeds on the surface of the Pb-Sb-based eutectic structure 50 in the same manner as in the case of a conventional Pb negative electrode.

Accordingly, when the negative electrode 8 has a metal structure as shown in FIG. 5 not according to the invention, the inhibition of the electrochemical reaction can be suppressed, that is, functioning as a sensor is possible, and the electrode chipping can also be suppressed. As a result, the occurrence of output fluctuations and output abnormalities can be suppressed, and further the extension of sensor life can also be achieved. The higher the Sb content in the Pb-Sb alloy, the lower the workability in electrode production. Therefore, considering this point, the Sb content in the metal structure shown in FIG. 5 is e.g. more than 11.1 wt% and 40.0 wt% or less, e.g. more than 11.1 wt% and 14.0 wt% or less. The metal structures shown in FIG. 3 and FIG. 4 are preferable (Sb content is 3.5 wt% or more and 11.1 wt% or less (more preferably 4.0 wt% or more and 11.1 wt% or less), the metal structure shown in FIG. 3 is more preferable (Sb content is 3.5 wt% or more and less than 11.1 wt% (more preferably 4.0 wt% or more and 10.0 wt% or less)), and the metal structure shown in FIG. 2 is yet further still more preferable (Sb content is 0.5 wt% or more and less than 3.5 wt% (more preferably 0.5 wt% or more and 3.0 wt% or less)).

It is preferable that the "Pb-Sb alloy" contains at least one element selected from the group consisting of Al, Ag, As, Bi, Cd, Cu, Fe, Mg, Na, Hg, Sn, Zn, S, Se, and Ca.

As described above, when the "Pb-Sb alloy" contains the above elements, functioning as a sensor is possible, and the electrode (negative electrode 8) chipping can be also suppressed.

When the "Pb-Sb alloy" contains the above elements, a decrease in workability due to the presence of Sb in Pb can also be suppressed.

It is preferable that the element contained in the "Pb-Sb alloy" is As, more preferably As and S.

The sensor is a galvanic oxygen sensor.

When the sensor according to the present invention is used for such an application, advantageous effects can be obtained.

The electrolyte solution 7 is not particularly limited as long as it dissolves the electrode and causes the electrochemical reaction. When the electrolyte solution 7 is acidic, it is preferable to use a mixed aqueous solution of acetic acid and potassium acetate. When the electrolyte solution 7 is alkaline, an aqueous potassium hydroxide solution or an aqueous sodium hydroxide solution is used, and it is particularly preferable to use an aqueous potassium hydroxide solution.

The present invention is not limited to the above embodiments, and various modifications can be made within the technical concept thereof.

For example, the reference numerals 1 to 15 in FIG. 1 are not limiting, and various design changes can be made as long as the sensor functions as an oxygen sensor and includes the oxygen supply path.

With respect to the Pb-Sb alloy, the entire electrode does not need to be one of the metal structures of FIG. 2 to FIG. 4, and it is possible that the electrode has a mixture of these metal structures.

### EXAMPLES

Next, the present invention will be described in further detail by way of examples. However, the present invention is not limited thereto.

### (Examples 1 to 4)

A one-year life galvanic cell type oxygen sensor shown in FIG. 1 was produced. In FIG. 1, the inner cover 1 is made of ABS resin, the protective membrane 3 is a porous sheet made of tetrafluoroethylene resin, the oxygen permeable membrane 4A is a tetrafluoroethylene-hexafluoropropylene copolymer membrane, the catalyst electrode 4B is made of gold, the positive current collector 5 is made of titanium, and the positive electrode leading wire 6 is made of titanium. The positive current collector 5 and the positive electrode leading wire 6 are integrally welded.

The electrolyte solution 7 is a mixed aqueous solution of acetic acid and potassium acetate (acetic acid: 6 mol/L, potassium acetate:3mol/L, pH:5.05 (25.5 °C)), the negative electrode 8 is made of Pb-Sb alloy (the Sb content will be mentioned later), the holder body 9 is made of ABS resin, and the outer cover 10 is made of ABS resin. The holder body 9 and the outer cover 10 are each threaded.

The inner cover 1, the O-ring 2, the sheet made of tetrafluoroethylene resin (protective membrane) 3, the oxygen permeable membrane 4A formed of tetrafluoroethylene-hexafluoropropylene copolymer membrane, the catalyst electrode 4B, and the positive current collector 5 are screwed with the holder body 9 and the outer cover 10, thus pressed, and kept in a good contact state. The inner cover 1 functions as a pressing end plate, and the O-ring 2 serves to ensure air-tightness and liquid-tightness.

11 denotes a bore for supplying an electrolyte solution to the positive electrode and the oxygen permeable membrane, and 12 denotes a bore for passing therethrough a titanium leading wire of the positive current collector.

The negative electrode 8 made of Pb-Sb alloy was produced according to the following method.

A Pb raw material and an Sb raw material were adjusted so that the Sb (antimony) content in the Pb-Sb alloy was 0.5 wt% (Example 1), 1.0 wt% (Example 2), 2.0 wt% (Example 3), or 3.0 wt% (Example 4), melted at a temperature of 630°C or higher, and then cooled to normal temperature, thereby producing negative electrodes 8 having a metal structure as shown in FIG. 2.

### (Examples 5 to 9)

A metal Sb raw material was adjusted so that the Sb content in the Pb-Sb alloy was 4.0 wt% (Example 5), 5.0 wt% (Example 6), 10.0 wt% (Example 7), 11.1 wt% (Example 8), or 14.0 wt% (Example 9, not according to the invention), melted at a temperature of 630°C or higher, and then cooled to normal temperature, thereby producing negative electrodes 8 having metal structures as shown in FIG. 3 to FIG. 5.

Subsequently, in the same manner as in Example 1, a one-year life galvanic cell type oxygen sensor shown in FIG. 1 was produced using each of the negative electrodes 8.

### (Comparative Example 1)

Instead of a Pb-Sb alloy, Pb metal (metal having a metal structure as shown in FIG. 8) was used to produce a negative electrode 8. Subsequently, in the same manner as in Example 1, a one-year life galvanic cell type oxygen sensor shown in FIG. 1 was produced.

### [Comparison of Characteristics]

The oxygen sensors produced above (Examples 1 to 9 and Comparative Example 1) were allowed to stand at normal temperature (25°C) for 360 days and then disassembled, and the presence or absence of electrode fragments (mass) having a size (average of the lengths of the longest and shortest sides of a mass measured: the same shall apply hereinafter) of 0.1 mm or more in the electrolyte solution was visually checked. In addition, the oxygen sensors were allowed to stand still and evaluated as to whether the output voltage was stable in atmospheric flow.

The expression "the output voltage is stable" referred to herein means the case where, as shown in FIG. 7, when the tendency of the output voltage relative to the measurement time is plotted on a graph having the measurement time as the horizontal axis and the output voltage as the vertical axis, a straight line as shown in FIG. 7 is drawn (the same shall apply hereinafter).

The results are shown in Table 1.

**[Table 1]**

| | Sb content | Metal Structure | Presence or Absence of Mass | Output Voltage Stability |
|---|---|---|---|---|
| Example 1 | 0.5 wt% | FIG. 2 | Absent | Stable |
| Example 2 | 1.0 wt% | FIG. 2 | Absent | Stable |
| Example 3 | 2.0 wt% | FIG. 2 | Absent | Stable |
| Example 4 | 3.0 wt% | FIG. 2 | Absent | Stable |
| Example 5 | 4.0 wt% | FIG. 3 | Absent | Stable |
| Example 6 | 5.0 wt% | FIG. 3 | Absent | Stable |
| Example 7 | 10.0 wt% | FIG. 3 | Absent | Stable |
| Example 8 | 11.1 wt% | FIG. 4 | Absent | Stable |
| Example 9 | 14.0 wt% | FIG. 5 | Absent | Stable |
| Comparative Example 1 | - | FIG. 8 | Mass present | Unstable |

As is understood from Table 1, except for Comparative Example 1, partial chipping in the electrode in the form of a mass can be suppressed. It is also understood that with any of the metal structures shown in FIG. 2 to FIG. 5, the output voltage is stable.

### (Examples 10 to 13)

A Pb raw material and an Sb raw material were adjusted so that the Sb content in the Pb-Sb alloy was 0.5 wt% (Example 10), 1.0 wt% (Example 11), 2.0 wt% (Example 12), or 3.0 wt% (Example 13), melted at a temperature of 630°C or higher, and then cooled to normal temperature, thereby producing negative electrodes 8 having a metal structure as shown in FIG. 2.

### (Examples 14 to 18)

A metal Sb raw material was adjusted so that the Sb content in the Pb-Sb alloy was 4.0 wt% (Example 14), 5.0 wt% (Example 15), 10.0 wt% (Example 16), 11.1 wt% (Example 17), or 14.0 wt% (Example 18, not according to the invention), melted at a temperature of 630°C or higher, and then cooled to normal temperature, thereby producing negative electrodes 8 having metal structures as shown in FIG. 3 to FIG. 5.

Subsequently, in the same manner as in Example 1 except for using an aqueous potassium hydroxide solution (9.24mol/L, pH:15 (26.0 °C)) as the electrolyte solution 7, a one-year life galvanic cell type oxygen sensor shown in FIG. 1 was produced using each of the negative electrodes 8.

### (Comparative Example 2)

Instead of a Pb-Sb alloy, Pb metal (metal having a metal structure as shown in FIG. 8) was used to produce a negative electrode 8. Subsequently, in the same manner as in Example 1 except for using an aqueous potassium hydroxide solution (9.24mol/L, pH:15 (26.0 °C)) as the electrolyte solution 7, a one-year life galvanic cell type oxygen sensor shown in FIG. 1 was produced.

### (Comparison of Characteristics)

The oxygen sensors produced above (Examples 10 to 18 and Comparative Example 2) were allowed to stand at normal temperature (25°C) for 360 days and then disassembled, and the presence or absence of electrode fragments (mass) in the electrolyte solution of the same size as in Example 1 was visually checked. In addition, the oxygen sensors were allowed to stand still and evaluated as to whether the output voltage was stable in atmospheric flow.

The results are shown in Table 2.

**[Table 2]**

| | Sb content | Metal Structure | Presence or Absence of Mass | Output Voltage Stability |
|---|---|---|---|---|
| Example 10 | 0.5 wt% | FIG. 2 | Absent | Stable |
| Example 11 | 1.0 wt% | FIG. 2 | Absent | Stable |
| Example 12 | 2.0 wt% | FIG. 2 | Absent | Stable |
| Example 13 | 3.0 wt% | FIG. 2 | Absent | Stable |
| Example 14 | 4.0 wt% | FIG. 3 | Absent | Stable |
| Example 15 | 5.0 wt% | FIG. 3 | Absent | Stable |
| Example 16 | 10.0 wt% | FIG. 3 | Absent | Stable |
| Example 17 | 11.1 wt% | FIG. 4 | Absent | Stable |
| Example 18 | 14.0 wt% | FIG. 5 | Absent | Stable |
| Comparative Example 2 | - | FIG. 8 | Mass present | Unstable |

As is understood from Table 2, except for Comparative Example 2, partial chipping in the electrode in the form of a mass can be suppressed. It is also understood that with any of the metal structures shown in FIG. 2 to FIG. 5, the output voltage is stable.

### (Examples 19 to 20)

A negative electrode 8 was produced, which was substantially the same as that in Example 5, except that the Pb-Sb alloy contained As in an small amount of less than 0.5wt% (Example 19).

A negative electrode 8 was produced, which was substantially the same as that in Example 6, except that the Pb-Sb alloy contained two elements of As and S (sulfur) in an small amount of less than 0.5wt% in total (Example 20).

Subsequently, in the same manner as in Example 5 and 6, a one-year life galvanic cell type oxygen sensor shown in FIG. 1 was produced using each of the negative electrodes 8.

The oxygen sensors produced above (Examples 19 to 20) were allowed to stand at normal temperature (25°C) for 360 days and then disassembled, and the presence or absence of electrode fragments (mass) in the electrolyte solution of the same size as in Example 1 was visually checked. In addition, the oxygen sensors were allowed to stand still and evaluated as to whether the output voltage was stable in atmospheric flow.

The results are shown in Table 3.

**[Table 3]**

| | Sb content | Metal Structure | Presence or Absence of Mass | Output Voltage Stability |
|---|---|---|---|---|
| Example 19 | Sb: 4.0 wt% | FIG. 3 | Absent | Stable |
| Example 20 | Sb: 5.0 wt% | FIG. 3 | Absent | Stable |

As is understood from Table 3, in Examples 19 to 20, partial chipping in the electrode in the form of a mass can be suppressed. It is also understood that the output voltage is stable.

With respect to Examples 5, 6, 19, and 20, the presence or absence of electrode fragments (mass) having a size of less than 0.1 mm (hereinafter referred to as powdery mass) in the electrolyte solution was visually observed.

As a result, Examples 5 and 6 are the same levels, and it was observed that the formation of powdery masses had been suppressed in the order of Examples 5 (or 6), 19, and 20.

The same tendency was shown even when the Sb content in the Pb-Sb alloy was varied or/and an aqueous potassium hydroxide solution was used as the electrolyte solution 7.

## Claims

1. A galvanic cell oxygen sensor comprising:
a holder (9); and
a positive electrode (45), a negative electrode (8), and an electrolyte solution (7)
that are placed in the holder (9),
a correction resistance (14) and a thermistor for temperature compensation (15) that are connected in series to the positive electrode (45) and the negative electrode (8),
**characterized in that** the negative electrode (8) contains a Pb-Sb alloy, and the Sb content in the Pb-Sb alloy is 0.5 wt % or more and 11.1 wt % or less.

2. The sensor according to claim 1, wherein the Pb-Sb alloy has a metal structure including Pb-based crystal grains containing Sb.

3. The sensor according to claim 1 or 2, wherein the Pb-Sb alloy has an Sb content of 0.5 wt% or more and less than 3.5 wt%.

4. The sensor according to claim 1, wherein the Pb-Sb alloy has a metal structure including a mixture of Pb-based crystal grains containing Sb and a Pb-Sb-based eutectic structure.

5. The sensor according to claim 1 or 4, wherein the Pb-Sb alloy has an Sb content of 3.5 wt% or more and less than 11.1 wt%.

6. The sensor according to claim 1, wherein the Pb-Sb alloy has a metal structure including only a Pb-Sb-based eutectic structure.

7. The sensor according to claim 1 or 6, wherein the Pb-Sb alloy has an Sb content of 11.1 wt%.

8. The sensor according to any one of claims 1 to 7, wherein the electrolyte solution (7) is acidic, or
wherein the electrolyte solution (7) is alkaline.

9. The sensor according to any one of claims 1 to 7, wherein the electrolyte solution (7) is a mixed aqueous solution of acetic acid and potassium acetate.

10. The sensor according to any one of claims 1 to 7, wherein the electrolyte solution (7) is an aqueous potassium hydroxide solution.

11. The sensor according to any one of claims 1 to 10 , wherein the Pb-Sb alloy contains at least one element selected from the group consisting of Al, Ag, As, Bi, Cd, Cu, Fe, Mg, Na, Hg, Sn, Zn, S, Se, and Ca.

## Patentansprüche

1. Sauerstoffsensor mit galvanischer Zelle, umfassend:
eine Halterung (9); und
eine positive Elektrode (45), eine negative Elektrode (8), und eine Elektrolytlösung (7), die in die Halterung platziert werden,
einen Korrekturwiderstand (14) und einen Thermistor zur Temperaturkompensation (15), die mit der positiven Elektrode (45) und der negativen Elektrode (8) in Reihe geschaltet sind,
**dadurch gekennzeichnet, dass** die negative Elektrode (8) eine Pb-Sb-Legierung enthält, und der Sb-Gehalt in der Pb-Sb-Legierung 0,5 Gew.-% oder mehr und 11,1 Gew.-% oder weniger beträgt.

2. Sensor gemäß Anspruch 1, wobei die Pb-Sb-Legierung eine Metallstruktur aufweist, die Pb-basierte Kristallkörner, die Sb enthalten, umfasst.

3. Sensor gemäß Anspruch 1 oder 2, wobei die Pb-Sb-Legierung einen Sb-Gehalt von 0,5 Gew.-% oder mehr und weniger als 3,5 Gew.-% aufweist.

4. Sensor gemäß Anspruch 1, wobei die Pb-Sb-Legierung eine Metallstruktur aufweist, die eine Mischung aus Pb-basierte Kristallkörnern, die Sb enthalten, und einer Pb-Sb-basierten eutektischen Struktur umfasst.

5. Sensor gemäß Anspruch 1 oder 4, wobei die Pb-Sb-Legierung einen Sb-Gehalt von 3,5 Gew.-% oder mehr und weniger als 11,1 Gew.-% aufweist.

6. Sensor gemäß Anspruch 1, wobei die Pb-Sb-Legierung eine Metallstruktur aufweist, die nur eine Pb-Sb-basierte eutektische Struktur umfasst.

7. Sensor gemäß Anspruch 1 oder 6, wobei die Pb-Sb-Legierung einen Sb-Gehalt von 11,1 Gew.-% aufweist.

8. Sensor gemäß einem der Ansprüche 1 bis 7, wobei die Elektrolytlösung (7) sauer ist, oder
wobei die Elektrolytlösung (7) basisch ist.

9. Sensor gemäß einem der Ansprüche 1 bis 7, wobei die Elektrolytlösung (7) eine wässrige Mischlösung aus Essigsäure und Kaliumacetat ist.

10. Sensor gemäß einem der Ansprüche 1 bis 7, wobei die Elektrolytlösung (7) eine wässrige Kaliumhydroxidlösung ist.

11. Sensor gemäß einem der Ansprüche 1 bis 10, wobei die Pb-Sb-Legierung mindestens ein Element, ausgewählt aus der Gruppe bestehend aus Al, Ag, As, Bi, Cd, Cu, Fe, Mg, Na, Hg, Sn, Zn, S, Se und Ca enthält.

## Revendications

1. Capteur d'oxygène de cellule galvanique comprenant :
un détenteur (9) ; et
une électrode positive (45), une électrode négative (8) et
une solution électrolytique (7) qui sont placées dans le détenteur (9),
une résistance de correction (14) et un thermistor pour la compensation de température (15) qui sont connectés en série à l'électrode positive (45) et à l'électrode négative (8),
**caractérisé en ce que** l'électrode négative (8) contient un alliage en Pb-Sb, et la teneur en Sb dans l'alliage en Pb-Sb est de 0,5 % en poids ou plus et de 11,1 % en poids ou moins.

2. Capteur selon la revendication 1, dans lequel l'alliage en Pb-Sb a une structure métallique comprenant des grains de cristal à base de Pb contenant Sb.

3. Capteur selon la revendication 1 ou 2, dans lequel l'alliage en Pb-Sb a une teneur en Sb de 0,5 % en poids ou plus et de moins de 3,5 % en poids.

4. Capteur selon la revendication 1, dans lequel l'alliage en Pb-Sb a une structure métallique comprenant un mélange de grains de cristal à base de Pb contenant Sb et une structure eutectique à base de Pb-Sb.

5. Capteur selon la revendication 1 ou 4, dans lequel l'alliage en Pb-Sb a une teneur en Sb de 3,5 % en poids ou plus et de moins de 11,1 % en poids.

6. Capteur selon la revendication 1, dans lequel l'alliage Pb-Sb a une structure métallique comprenant seulement une structure eutectique à base de Pb-Sb.

7. Capteur selon la revendication 1 ou 6, dans lequel l'alliage en Pb-Sb a une teneur en Sb de 11,1 % en poids.

8. Capteur selon l'une quelconque des revendications 1 à 7, dans lequel la solution électrolytique (7) est acide, ou dans lequel la solution électrolytique est alcaline.

9. Capteur selon l'une quelconque des revendications 1 à 7, dans lequel la solution électrolytique (7) est une solution aqueuse mixte d'acide acétique et d'acétate de potassium.

10. Capteur selon l'une quelconque des revendications 1 à 7, dans lequel la solution électrolytique (7) est une solution d'hydroxyde de potassium aqueuse.

11. Capteur selon l'une quelconque des revendications 1 à 10, dans lequel l'alliage en Pb-Sb contient au moins un élément choisi dans le groupe constitué par Al, Ag, Bi, Cd, Cu, Fe, Mg, Na, Hg, Sn, Zn, S, Se et Ca.
